# EUROPEAN PATENT SPECIFICATION

(11) **EP 4 638 099 B1**
(45) Date of publication and mention of the grant of the patent: **29.04.2026**
(21) Application number: 23825455.1
(22) Date of filing: 23.11.2023
(51) Int. Cl.: B29C 65/30, B29C 65/00, B29C 65/18, B29L 31/00

(54) **WELDING UNIT FOR A VERTICAL PACKAGING MACHINE AND A VERTICAL PACKAGING MACHINE**
SCHWEISSEINHEIT FÜR EINE VERTIKALE VERPACKUNGSMASCHINE UND VERTIKALE VERPACKUNGSMASCHINE
UNITÉ DE SOUDAGE POUR UNE MACHINE D'EMBALLAGE VERTICALE ET MACHINE D'EMBALLAGE VERTICALE

(30) Priority: 22.12.2022 IT 202200026439
(43) Date of publication of application: 29.10.2025
(73) Proprietor: MBP S.r.l., 46043 Castiglione delle Stiviere (Mantova) (IT)
(72) Inventor: FIORAVANTI, Andrea, 46043 Castiglione delle Stiviere (Mantova) (IT); PAVAN, Marco, 46043 Castiglione delle Stiviere (Mantova) (IT)
(74) Representative: Sandri, Sandro
(86) International application number: PCT/IB2023/061851
(87) International publication number: WO 2024/134316

(56) References cited:
- EP-A1- 3 205 588
- DE-A1- 102011 075 424
- DE-A1- 102020 133 920
- JP-A- H07 232 715
- US-A1- 2018 057 198
- US-B1- 9 146 184

## Description

### TECHNICAL FIELD

The present invention relates to a welding unit for a vertical packaging machine and a vertical packaging machine.

More particularly, the following invention relates to a welding unit and to a vertical packaging machine for the production of sealed bags containing products of various kinds, mainly but not exclusively of the food type.

Therefore, the present invention is advantageously applied in the field of packaging machines for products of various kinds, and mainly of the food type.

### PRIOR ART

As is known, the sealed packages normally present in supermarkets containing products of various kinds, for example mostly of the food type, are produced by automatic machines known as packaging machines.

As illustrated in EP3205588A1, there are various types of these machines of varying nature, and among these there are also versions which are normally defined as vertical packaging machines.

Such packaging machines comprise a dosing device placed in a top portion and from which the product to be packaged is left to fall to be conveyed in a vertical metal tube of variable width and reduced length, called a forming tube.

Outside this tube, the film which advances around the tube is wound by means of a pulling system consisting of rubberised belts and parts made of curved sheet metal, arranged around the forming tube.

Using rubberised belts, it is possible to approach the flaps of the film which will be welded both vertically and horizontally, making the sealed package.

The traditional welding systems installed on the machine are based on the use of bars heated by means of electrical resistors and controlled with electronic devices, which verify the temperature instant by instant by means of a probe, then giving the right power to the heating resistors.

These sealing bars, which are generally installed in the central front part of the vertical packaging machine at the joining area of the film, are moved through connecting rod-crank mechanisms. To weld the flaps of the package, the bars are pushed against one another with high forces and temperatures so that the various layers of film previously superimposed at the overlapping areas, due to the strong pressure and temperature, can be welded to one another.

Depending on the type of packaging to be made, sometimes sealing bars with different welding profiles are needed, and in most cases this is not possible or rather complex and very prolonged mechanical interventions are necessary which can only be carried out by highly specialised personnel.

Consequently, this represents a problematic aspect of the known solutions and this considerably penalises the performance of the vertical packaging machines on the basis of their ability to make packages of various types.

Another problem has also been found related to the traditional devices mounted on the vertical packaging machines in relation to the format changes.

As normally occurs, the users of these packaging machines need to produce packages of various sizes, therefore, they are obliged to also carry out various mechanical adjustments to adapt the machine to the new format of the package to be produced with a considerable loss of time before restarting with a new production.

Similarly, using the known vertical packaging machines, the difficulty of adjusting the welding pressure necessary for format changes has been found, as it is constrained to the mechanical adjustments.

In fact, the traditional welding jaws made according to the known solutions are, as said, translatable to move to the welding position by means of the use of mechanisms of the connecting rod/crank type, while the compressive force is determined by the use of springs or other similar elastic elements pre-calibrated for a specific compression which cannot be modulated.

Furthermore, certain packages can have mutually different overlapping areas, as they are generated by the superimposition of a number of different layers of film. The welding of the flaps of such packages requires the application of a greater pressure at the thickest overlapping area so as to make an effective weld and the application of a lower pressure at the less thick overlapping area so as to avoid a breakage of the flap. Therefore, a long and cumbersome adjustment of the pressure is necessary so as to apply the adequate pressure levels to the specific areas of the package.

All this negatively affects the packaging processes and leads to an excessive prolongation of the times necessary for the changes in format, ultimately causing a condition such that the limitation of production costs is prevented, which for this reason remain high, also due to the need for frequent intervention by the assigned personnel.

### DESCRIPTION OF THE INVENTION

In this context, the technical task underpinning the present invention is to provide a welding unit for a vertical packaging machine and a vertical packaging machine which obviate the drawbacks in the prior art as described above.

In particular, it is an object of the present invention to provide a welding unit for a vertical packaging machine and a vertical packaging machine which ensure an increase in the efficiency of the welding process relative to the devices of the prior art.

A further object of the present invention is to provide a welding unit for a vertical packaging machine and a vertical packaging machine having high operational flexibility.

A further object of the present invention is to provide a welding unit for a vertical packaging machine and a vertical packaging machine which has a prolonged average working life relative to that of the prior-art devices.

The stated technical task and specified objects are substantially achieved by a welding unit for a vertical packaging machine and a vertical packaging machine comprising the technical features disclosed in the independent claim.

The appended claims outline possible advantageous embodiments of the invention.

### ILLUSTRATION OF THE DRAWINGS

Further features and advantages of the present invention will become more apparent from the following approximate, and hence non-limiting, description of a preferred, but not exclusive, embodiment of a welding unit for a vertical packaging machine and a vertical packaging machine, as illustrated in the appended drawings, in which:

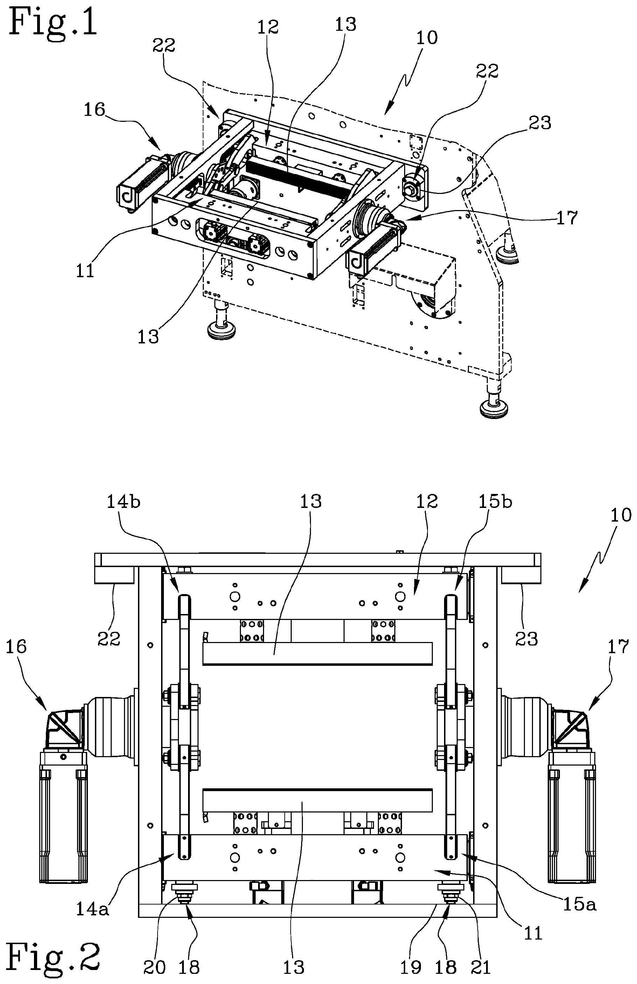

- figure 1 is a perspective view of a welding unit for a vertical packaging machine and a vertical packaging machine in accordance with a possible embodiment of the present invention;
- figure 2 is a top view of the welding unit of figure 1 ;

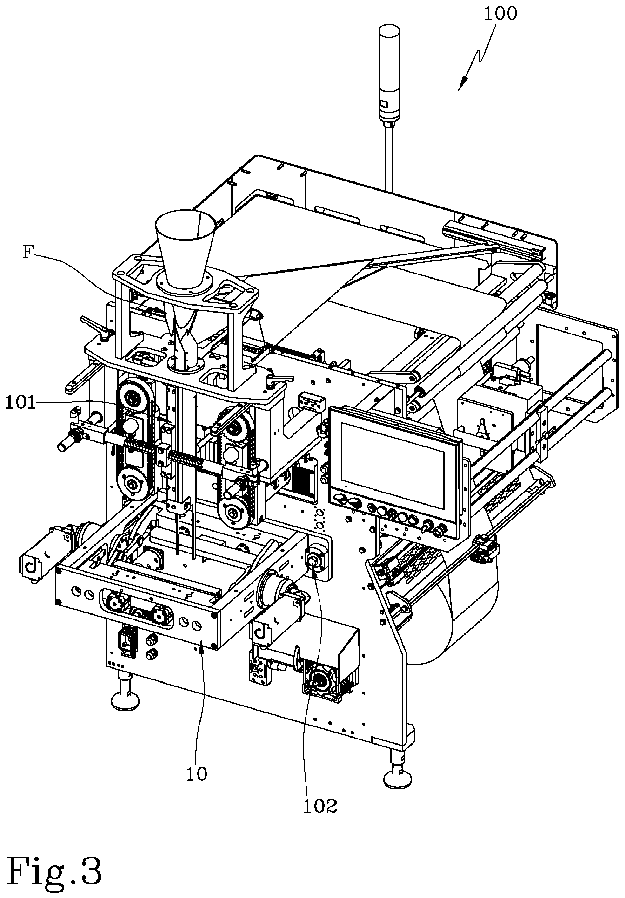

- figure 3 is a perspective view of a vertical packaging machine in accordance with a further aspect of the present invention.

### DESCRIPTION OF AN EMBODIMENT OF THE INVENTION

In accordance with the accompanying drawings, the reference number 10 has been used to generally designate a welding unit for a vertical packaging machine, which will be referred to hereinafter as welding unit 10.

The welding unit 10 comprises a first welding jaw 11 and a second welding jaw 12 facing one another.

The first welding jaw 11 and the second welding jaw 12 are movable reciprocally nearer to and farther from one another to weld in a transverse direction a shaped film "F" fed by a vertical packaging machine 100.

In particular, each welding jaw 11, 12 can comprise a respective welding bar 13 activatable on the film "F" to perform the welding thereof.

As illustrated in the accompanying drawings, the first welding jaw 11 and the second welding jaw 12 extend respectively between a first end 14a, 14b and a second end 15a, 15b. In particular, the first end 14a of the first welding jaw 11 faces the first end 14b of the second welding jaw 12. Furthermore, the second end 15a of the first welding jaw 11 faces the second end 15b of the second welding jaw 12.

Furthermore, the welding unit 10 comprises a first actuator 16 and a second actuator 17.

In particular, the first actuator 16 is operationally associated with the first welding jaw 11 and the second welding jaw 12 to make a movement reciprocally nearer to and farther away from the first end 14a of the first welding jaw 11 and the first end 14b of the second welding jaw 12.

The second actuator 17 is operationally associated with the first welding jaw 11 and the second welding jaw 12 to make a movement reciprocally nearer to and farther away from the second end 15a of the first welding jaw 11 and the second end 15b of the second welding jaw 12.

That is, the actuators 16, 17 are configured to make a movement of the first ends 14a, 14b and the second ends 15a, 15b facing one another of the first welding jaw 11 and the second welding jaw 12.

Preferably, the first actuator 16 can be activatable on the first welding jaw 11 and on the second welding jaw 12 to apply a first clamping force to the film "F". Furthermore, the second actuator 17 can be activatable on the first welding jaw 11 and on the second welding jaw 12 to apply a second clamping force to the film "F".

Advantageously, the first actuator 16 and the second actuator 17 can be independent of one another so that the first clamping force is independent of the second clamping force.

That is, the independence between the first actuator 16 and the second actuator 17 ensures a substantially independent movement of the opposite ends of the welding jaws 11, 12.

Thereby, the welding unit 10 allows to apply different clamping force values to different portions of the film "F" and, therefore, allows to apply different clamping force values to overlapping areas having different thicknesses, ensuring an effective welding at the overlapping areas of greater thickness and preventing a breakage of the film "F" at the overlapping areas of lesser thickness.

As will be described in greater detail below, such clamping force values can be detected and evaluated so as to optimise and simplify the welding process of the film "F".

In accordance with a possible embodiment and as illustrated in the accompanying drawings, the first actuator 16 can be connected to the first end 14a of the first welding jaw 11 and to the first end 14b of the second welding jaw 12 to make a movement reciprocally nearer to and farther away from the first ends 14a, 14b. Likewise, the second actuator 17 can be connected to the second end 15a of the first welding jaw 11 and to the second end 15b of the second welding jaw 12 to make a movement reciprocally nearer to and farther away from the second ends 15a, 15b.

According to a further advantageous aspect of the present invention, the first actuator 16 and/or the second actuator 17 can comprise a brushless motor.

Advantageously, the first actuator 16 and/or the second actuator 17 and, in particular, the brushless motors can be easily disconnected from the welding unit 10 and/or from the feeding means dedicated thereto so as to simplify a connection and/or a removal of the welding unit 10 from the vertical packaging machine 100 as will be described in greater detail below.

Furthermore, the first actuator 16 and/or the second actuator 17 can comprise a respective connecting rod-crank system active on the first jaw 11 and on the second jaw 12 to promote the movement thereof.

In particular, planetary reducers can be interposed between the brushless motors and the respective connecting rod-crank system.

Thereby, the first actuator 16 and the second actuator 17 allow to increase the operating life of the welding unit 10, overcoming the intrinsic fragility of the transmission systems, for example of the ball recirculation type, employed in the devices belonging to the prior art.

Advantageously, the welding unit 10 further comprises detecting means 18 active on the first welding jaw 11 and/or on the second welding jaw 12 to detect at least one clamping force applied by the first welding jaw 11 and/or by the second welding jaw 12 to the film "F".

Thereby, the detecting means 18 allows to streamline and simplify the process of adjusting the clamping force applied by the welding jaws 11, 12 to the film "F" ensuring an accurate and, preferably, constant measurement of the clamping force values applied to the film "F".

In particular, the detecting means 18 can be connected to a control unit comprised in the welding unit 10 or external thereto, for example comprised in the vertical packaging machine 100 and configured to activate the first welding jaw 11 and/or the second welding jaw 12 in function of at least one detection of the clamping force operated by the detecting means 18.

Thereby, the control unit can perform, for example, a feedback control of the first welding jaw 11 and/or the second welding jaw 12 in function of the detections of the at least one clamping force operated by the detecting means 18, modifying the first clamping force and/or the second clamping force and/or a resultant thereof in function of the force actually detected by the detecting means 18.

Preferably, the welding unit 10 comprises the aforementioned control unit (not illustrated in the accompanying drawings).

For example, the detecting means 18 can be active between one of the two welding jaws 11, 12 and a peripheral edge 19 of the welding unit 1 so as to detect the clamping force at least when the jaws 11, 12 are reciprocally approached to perform the welding of the film "F".

Preferably, the detecting means 18 can comprise at least one load cell 20, 21.

In accordance with a possible embodiment of the present invention and as illustrated in the accompanying drawings, the detecting means 18 can comprise a first load cell 20 and a second load cell 21 respectively arranged at the first end 14a and the second end 15a of the first jaw 11.

Thereby, the detecting means 18 can detect the clamping force applied at the ends of the film and, therefore, at the overlapping areas. Therefore, the detecting means 18 allows the control unit to control the first actuator 16 and the second actuator 17 so that, in the presence of overlapping areas having different thicknesses, the first actuator 16 and the second actuator 17 can apply the adequate clamping force to the respective overlapping areas, ensuring an effective welding at the overlapping area of greater thickness and preventing a breakage of the film "F" at the overlapping area of lesser thickness.

According to further possible embodiments not illustrated in the appended drawings, the detecting means 18 can comprise sensors of different types and/or the load cells can be in a different number, for example a further load cell can be envisaged, arranged substantially at the centreline of the first and/or second welding jaw 11, 12 or the load cells can be arranged on the second jaw 12 or on both jaws 11, 12, without the inventive concept underlying the present invention being altered.

In accordance with a further advantageous aspect, the welding unit 10 can comprise reversible connecting means 22 configured to reversibly connect the welding unit 1 to the vertical packaging machine 100.

Purely by way of non-limiting example, the reversible connecting means 22 can comprise at least one coupling portion 23 adapted to achieve a shape coupling with a respective connecting body of the vertical packaging machine 100.

For example, the coupling portion 23 can be configured to receive respective fixing pins connected to the vertical packaging machine 100.

In accordance with further possible embodiments of the present invention, the welding unit 10 can be arranged in support and/or at least partially housed inside a special seat made in the vertical packaging machine 100.

Thereby, the reversible connecting means 22 allows to simplify the connection of the welding unit 10 to the vertical packaging machine 100 and/or a replacement thereof with a further welding unit 10 as will be described in greater detail below.

In fact, it should be noted that the welding unit 10 can be removable and interchangeable with further welding units with different operational peculiarities so as to give the vertical packaging machine 100 high operational flexibility.

In accordance with a further aspect, the present invention relates to a vertical packaging machine 100 for packaging products to be bagged.

In particular, the vertical packaging machine 100 comprises a welding unit 10 in accordance with what has been described above.

Furthermore, the vertical packaging machine 100 comprises conveying means 101 comprising a forming tube and configured to feed a film "F" coming from a feeding reel to said welding unit 1.

Advantageously, the vertical packaging machine 100 further comprises constraining means 102 operationally associable with the welding unit 1 to constrain it to the vertical packaging machine 100.

In particular, the constraining means 102 can comprise various kinds of coupling bodies, for example pins, guides and/or threaded elements, associable with respective coupling portions 23 of the welding unit 10 to achieve a reversible coupling.

Purely by way of non-limiting example, the constraining means 102 can comprise special guides adapted to simplify the connection between the welding unit 1 and the vertical packaging machine 100 and a relative movement thereof.

In accordance with a particularly advantageous aspect of the present invention, the welding unit 1 is removable and the constraining means 102 is configured to reversibly constrain the welding unit 1 to the vertical packaging machine 100 so that the welding unit is interchangeable.

Thereby, the constraining means 102 allows to simplify the operations of replacing the welding unit 10, reducing the timing of the packaging process and, therefore, increasing the efficiency of the production line.

It is thus noted that the present invention achieves the proposed objects by making a welding unit for a vertical packaging machine and a vertical packaging machine thanks to the presence of a first actuator and a second actuator operationally associated with the welding jaws and detecting means configured to detect the clamping force applied to the film.

Advantageously, the present invention allows to overcome the problem induced by the presence of overlapping areas having different thicknesses thanks to an accurate application and measurement of the clamping force applied to the film.

## Claims

1. A welding unit (10) for a vertical packaging machine, said welding unit (10) comprising:
- a first welding jaw (11) and a second welding jaw (12) facing one another, said first welding jaw (11) and said second welding jaw (12) being movable reciprocally nearer to and farther away from one another to weld in a transverse direction a shaped film (F) fed by a vertical packaging machine; wherein said first welding jaw (11) and said second welding jaw (12) extend between a respective first end (14a, 14b) and a respective second end (15a, 15b); wherein said first end (14a) of said first welding jaw (11) faces said first end (14b) of said second welding jaw (12); and wherein said second end (15a) of said first welding jaw (11) faces said second end (15b) of said second welding jaw (12);
- a first actuator (16) operationally associated with said first welding jaw (11) and with said second welding jaw (12) to make a movement reciprocally nearer to and farther away from said first ends (14a, 14b);
- a second actuator (17) operationally associated with said first welding jaw (11) and with said second welding jaw (12) to make a movement reciprocally nearer to and farther away from said second ends (15a, 15b);
- detecting means (18) active on said first welding jaw (11) and/or on said second welding jaw (12) to detect at least one clamping force applied by said first welding jaw (11) and/or by said second welding jaw (12) to the film (F);
**characterised in that** said first actuator (16) is activatable on said first welding jaw (11) and on said second welding jaw (12) to apply a first clamping force to the film (F); and **in that** said second actuator (17) is activatable on said first welding jaw (11) and said second welding jaw (12) to apply a second clamping force to the film (F); and wherein said first actuator (16) and said second actuator (17) are independent of each other in such a way that said first clamping force is independent of said second clamping force.

2. The welding unit according to claim 1, wherein said first actuator (16) and/or said second actuator (17) comprise a brushless motor.

3. The welding unit according to one or more of the preceding claims, wherein said first actuator (16) is connected to said first end (14a) of said first welding jaw (11) and to said first end (14b) of said second welding jaw (12) to make a movement reciprocally nearer to and farther away from said first ends (14a, 14b); and wherein said second actuator (17) is connected to said second end (15a) of said first welding jaw (11) and to said second ends (15b) of said second welding jaw (12) to make a movement reciprocally nearer to and farther away from said second ends (15a, 15b).

4. The welding unit according to one or more of the preceding claims, wherein said detecting means (18) comprises at least one first load cell (20) arranged at said first end (14a, 14b) of said first jaw (11) and/or of said second jaw (12); and wherein said detecting means (18) comprises at least one second load cell (21) arranged at said second end (15a, 15b) of said first jaw (11) and/or of said second jaw (12).

5. The welding unit according to one or more of the preceding claims, comprising reversible connecting means (22) configured to connect reversibly said welding unit (10) to the vertical packaging machine.

6. The welding unit according to claim 5, wherein said connecting means comprises at least one coupling portion (23) adapted to achieve a shape coupling with a respective connecting body of the vertical packaging machine.

7. The welding unit according to one or more of the preceding claims, comprising a control unit operationally connected to said detecting means (18) and configured to activate said first welding jaw (11) and/or said second welding jaw (12) in function of at least one detection of said clamping force operated by said detecting means (18).

8. A vertical packaging machine for packaging products to be bagged, said machine comprising:
- a welding unit (10) according to one or more of the preceding claims;
- conveying means (101) comprising a forming tube and configured to feed a film (F) coming from a feeding reel to said welding unit (10);
- constraining means (102) operationally associable with said welding unit (10) to constrain said welding unit (10) to said vertical packaging machine.

9. The packaging machine according to claim 8, wherein said welding unit (10) is removable; and wherein said constraining means (102) is configured to constrain reversibly said welding unit (10) to said vertical packaging machine so that said welding unit (10) is interchangeable.

## Patentansprüche

1. Eine Schweißeinheit (10) für eine vertikale Verpackungsmaschine, wobei die Schweißeinheit (10) umfasst:
- eine erste Schweißbacke (11) und eine zweite Schweißbacke (12), die einander
gegenüberliegen, wobei die erste Schweißbacke (11) und die zweite Schweißbacke (12) hin- und her bewegbar sind, um sich einander anzunähern und voneinander zu entfernen, um eine von einer vertikalen Verpackungsmaschine zugeführte Formfolie (F) in Querrichtung zu verschweißen;
wobei sich die erste Schweißbacke (11) und die zweite Schweißbacke (12) zwischen einem jeweiligen ersten Ende (14a, 14b) und einem jeweiligen zweiten Ende (15a, 15b) erstrecken;
wobei das erste Ende (14a) der ersten Schweißbacke (11) dem ersten Ende (14b) der zweiten Schweißbacke (12) gegenüberliegt; und wobei das zweite Ende (15a) der ersten Schweißbacke (11) dem zweiten Ende (15b) der zweiten Schweißbacke (12) zugewandt ist;
- einen ersten Aktuator (16), der funktionsmäßig mit der ersten Schweißbacke (11) und der zweiten Schweißbacke (12) verbunden ist, um eine hin- und hergehende Bewegung näher an die ersten Enden (14a, 14b) hin und weiter von diesen weg auszuführen;
- einen zweiten Aktuator (17), der funktionsmäßig mit der ersten Schweißbacke (11) und der zweiten Schweißbacke (12) verbunden ist, um eine Hin- und Her Bewegung in Richtung auf die zweiten Enden (15a, 15b) zu und von diesen weg auszuführen;
- eine Erfassungsvorrichtung (18), die an der ersten Schweißbacke (11) und/oder an der zweiten Schweißbacke (12) wirksam ist, um mindestens eine von der ersten Schweißbacke (11) und/oder von der zweiten Schweißbacke (12) auf die Folie (F) ausgeübte Klemmkraft zu erfassen;
**dadurch gekennzeichnet, dass** der erste Aktuator (16) an der ersten Schweißbacke (11) und an der zweiten Schweißbacke (12) betätigbar ist, um eine erste Klemmkraft auf die Folie (F) auszuüben; und dass der zweite Aktuator (17) an der ersten Schweißbacke (11) und an der zweiten Schweißbacke (12) aktivierbar ist, um eine zweite Klemmkraft auf die Folie (F) auszuüben; und wobei der erste Aktuator (16) und der zweite Aktuator (17) voneinander unabhängig sind, derart, dass die erste Klemmkraft von der zweiten Klemmkraft unabhängig ist.

2. Schweißeinheit nach Anspruch 1,
wobei der erste Aktuator (16) und/oder der zweite Aktuator (17) einen bürstenlosen Motor umfassen.

3. Schweißeinheit nach einem oder mehreren der vorstehenden Ansprüche,
wobei der erste Aktuator (16) mit dem ersten Ende (14a) der ersten Schweißbacke (11) und mit dem ersten Ende (14b) der zweiten Schweißbacke (12) verbunden ist, um eine hin- und hergehende Bewegung näher an die ersten Enden (14a, 14b) hin und weiter von diesen weg auszuführen; und wobei der zweite Aktuator (17) mit dem zweiten Ende (15a) der ersten Schweißbacke (11) und mit dem zweiten Ende (15b) der zweiten Schweißbacke (12) verbunden ist, um eine Hin- und Her Bewegung näher an die und weiter weg von den zweiten Enden (15a, 15b) auszuführen.

4. Schweißeinheit nach einem oder mehreren der vorstehenden Ansprüche,
wobei die Erfassungsvorrichtung (18) mindestens eine erste Wägezelle (20) umfasst, die am ersten Ende (14a, 14b) der ersten Backe (11) und/oder der zweiten Backe (12) angeordnet ist; und wobei die Erfassungsvorrichtung (18) mindestens eine zweite Wägezelle (21) umfasst, die am zweiten Ende (15a, 15b) der ersten Backe (11) und/oder der zweiten Backe (12) angeordnet ist.

5. Schweißeinheit nach einem oder mehreren der vorstehenden Ansprüche, umfassend eine reversible Verbindungseinrichtung (22), die so konfiguriert ist, dass sie die Schweißeinheit (10) reversibel mit der vertikalen Verpackungsmaschine verbindet.

6. Schweißeinheit nach Anspruch 5,
wobei die Verbindungsvorrichtung mindestens einen Kupplungsabschnitt (23) umfasst, der dazu ausgelegt ist, eine Formschlussverbindung mit einem entsprechenden Verbindungskörper der vertikalen Verpackungsmaschine herzustellen.

7. Schweißeinheit nach einem oder mehreren der vorstehenden Ansprüche, umfassend eine Steuereinheit, die funktionsmäßig mit der Erfassungsvorrichtung (18) verbunden und so konfiguriert ist, dass sie die erste Schweißbacke (11) und/oder die zweite Schweißbacke (12) in Abhängigkeit von mindestens einer von der Erfassungsvorrichtung (18) erfassten Klemmkraft aktiviert.

8. Vertikale Verpackungsmaschine zum Verpacken von in Beutel zu verpackenden Produkten, wobei die Maschine umfasst:
- eine Schweißeinheit (10) gemäß einem oder mehreren der vorstehenden Ansprüche,
- Fördermittel (101), die ein Formrohr umfassen und so konfiguriert sind, dass sie eine von einer Zuführrolle kommende Folie (F) der Schweißeinheit (10) zuführen - Befestigungsmittel (102), die funktionsmäßig mit der Schweißeinheit (10) verbunden werden können, um die Schweißeinheit (10) an der vertikalen Verpackungsmaschine zu befestigen.

9. Verpackungsmaschine nach Anspruch 8,
wobei die Schweißeinheit (10) abnehmbar ist; und wobei die Befestigungsvorrichtung (102) so ausgebildet ist, dass sie die Schweißeinheit (10) reversibel an der vertikalen Verpackungsmaschine befestigt, so dass die Schweißeinheit (10) austauschbar ist.

## Revendications

1. Unité de soudage (10) pour une machine d'emballage verticale, ladite unité de soudage (10) comprenant :
- une première mâchoire de soudage (11) et une seconde mâchoire de soudage (12) se faisant face, ladite première mâchoire de soudage (11) et ladite seconde mâchoire de soudage (12) étant mobiles réciproquement pour se rapprocher et s'éloigner l'une de l'autre afin de souder dans une direction transversale un film profilé (F) acheminé par une machine d'emballage verticale ; dans laquelle ladite première mâchoire de soudage (11) et ladite seconde mâchoire de soudage (12) s'étendent entre une première extrémité (14a, 14b) respective et une seconde extrémité (15a, 15b) respective; dans laquelle ladite première extrémité (14a) de ladite première mâchoire de soudage (11) fait face à ladite première extrémité (14b) de ladite seconde mâchoire de soudage (12) ; et dans laquelle ladite seconde extrémité (15a) de ladite première mâchoire de soudage (11) fait face à ladite seconde extrémité (15b) de ladite seconde mâchoire de soudage (12) ;
- un premier actionneur (16) associé de manière opérationnelle à ladite première mâchoire de soudage (11) et à ladite seconde mâchoire de soudage (12) pour effectuer un mouvement de rapprochement et d'éloignement réciproque desdites premières extrémités (14a, 14b) ;
- un second actionneur (17) associé de manière opérationnelle à ladite première mâchoire de soudage (11) et à ladite seconde mâchoire de soudage (12) pour effectuer un mouvement de rapprochement et d'éloignement réciproque desdites secondes extrémités (15a, 15b) ;
- des moyens de détection (18) actifs sur ladite première mâchoire de soudage (11) et/ou sur ladite seconde mâchoire de soudage (12) pour détecter au moins une force de serrage appliquée par ladite première mâchoire de soudage (11) et/ou par ladite seconde mâchoire de soudage (12) sur le film (F) ;
**caractérisée en ce que** ledit premier actionneur (16) peut être activé sur ladite première mâchoire de soudage (11) et sur ladite seconde mâchoire de soudage (12) pour appliquer une première force de serrage sur le film (F) ; et **en ce que** ledit second actionneur (17) peut être activé sur ladite première mâchoire de soudage (11) et ladite seconde mâchoire de soudage (12) pour appliquer une seconde force de serrage sur le film (F) ; et dans laquelle ledit premier actionneur (16) et ledit second actionneur (17) sont indépendants l'un de l'autre de telle manière que ladite première force de serrage est indépendante de ladite seconde force de serrage.

2. Unité de soudage selon la revendication 1, dans laquelle ledit premier actionneur (16) et/ou ledit second actionneur (17) comprennent un moteur sans balais.

3. Unité de soudage selon une ou plusieurs des revendications précédentes, dans laquelle ledit premier actionneur (16) est relié à ladite première extrémité (14a) de ladite première mâchoire de soudage (11) et à ladite première extrémité (14b) de ladite seconde mâchoire de soudage (12) pour effectuer un mouvement de rapprochement et d'éloignement réciproque desdites premières extrémités (14a, 14b) ; et dans laquelle ledit second actionneur (17) est relié à ladite seconde extrémité (15a) de ladite première mâchoire de soudage (11) et auxdites secondes extrémités (15b) de ladite seconde mâchoire de soudage (12) pour effectuer un mouvement de rapprochement et d'éloignement réciproque desdites secondes extrémités (15a, 15b).

4. Unité de soudage selon une ou plusieurs des revendications précédentes, dans laquelle lesdits moyens de détection (18) comprennent au moins une première cellule de charge (20) disposée au niveau de ladite première extrémité (14a, 14b) de ladite première mâchoire (11) et/ou de ladite seconde mâchoire (12) ; et dans laquelle lesdits moyens de détection (18) comprennent au moins une seconde cellule de charge (21) disposée au niveau de ladite seconde extrémité (15a, 15b) de ladite première mâchoire (11) et/ou de ladite seconde mâchoire (12).

5. Unité de soudage selon une ou plusieurs des revendications précédentes, comprenant des moyens de connexion réversibles (22) configurés pour connecter de manière réversible ladite unité de soudage (10) à la machine d'emballage verticale.

6. Unité de soudage selon la revendication 5, dans laquelle lesdits moyens de connexion comprennent au moins une partie d'accouplement (23) adaptée pour réaliser un accouplement de forme avec un corps de connexion respectif de la machine d'emballage verticale.

7. Unité de soudage selon une ou plusieurs des revendications précédentes, comprenant une unité de commande connectée de manière opérationnelle auxdits moyens de détection (18) et configurée pour activer ladite première mâchoire de soudage (11) et/ou ladite seconde mâchoire de soudage (12) en fonction d'au moins une détection de ladite force de serrage opérée par lesdits moyens de détection (18).

8. Machine d'emballage verticale pour l'emballage de produits à mettre en sachet, ladite machine comprenant :
- une unité de soudage (10) selon une ou plusieurs des revendications précédentes ;
- des moyens de transport (101) comprenant un tube de formage et configurés pour alimenter un film (F) provenant d'une bobine d'alimentation vers ladite unité de soudage (10) ;
- des moyens de contrainte (102) pouvant être associés de manière opérationnelle à ladite unité de soudage (10) pour contraindre ladite unité de soudage (10) à ladite machine d'emballage verticale.

9. Machine d'emballage selon la revendication 8, dans laquelle ladite unité de soudage (10) est amovible ; et dans laquelle lesdits moyens de contrainte (102) sont configurés pour contraindre de manière réversible ladite unité de soudage (10) à ladite machine d'emballage verticale de sorte que ladite unité de soudage (10) soit interchangeable.
